# EUROPEAN PATENT SPECIFICATION

(11) **EP 3 759 673 B1**
(45) Date of publication and mention of the grant of the patent: **20.05.2026**
(21) Application number: 19760139.6
(22) Date of filing: 01.02.2019
(51) Int. Cl.: G06F 21/64, H04L 9/32

(54) **METHOD AND SYSTEM FOR OVERSEEING EXECUTION OF GRAPH-BASED CONTRACTS USING HASH CHAINS**
VERFAHREN UND SYSTEM ZUR ÜBERWACHUNG DER AUSFÜHRUNG VON GRAPHBASIERTEN CONTRACTS UNTER VERWENDUNG VON HASH-CHAINS
PROCÉDÉ ET SYSTÈME DE SUPERVISION D'EXÉCUTION DE CONTRATS FONDÉS SUR DES GRAPHES À L'AIDE DE CHAÎNES DE HACHAGE

(30) Priority: 28.02.2018 US 201815908788
(43) Date of publication of application: 06.01.2021
(73) Proprietor: Intuit Inc., Mountain View, CA 94043 (US)
(72) Inventor: EFTEKHARI, Amir, Mountain View, CA 94043 (US); SCOTT, Glenn, Mountain View, CA 94043 (US); MEIKE, Roger, Mountain View, CA 94043 (US); GABRIEL, Mike, Mountain View, CA 94043 (US); PANCHEVRE, Ian, Mountain View, CA 94043 (US); PENTLAND, Ian, Mountain View, CA 94043 (US)
(74) Representative: D Young & Co LLP
(86) International application number: PCT/US2019/016293
(87) International publication number: WO 2019/168633

(56) References cited:
- WO-A1-2017/115141
- JP-A- 2017 220 710
- US-A1- 2017 011 460
- US-A1- 2017 046 693
- US-A1- 2017 352 012
- US-A1- 2018 005 186
- "Mastering Blockchain", 17 March 2017, PACKT PUBLISHING, ISBN: 978-1-78712-544-5, article IMRAN BASHIR: "Mastering Blockchain", XP055393678
- JOSEPH POON ET AL: "Plasma: Scalable Autonomous Smart Contracts", 11 August 2017 (2017-08-11), XP055491638, Retrieved from the Internet <URL:https://plasma.io/plasma.pdf>

## Description

### BACKGROUND

Business processes such as transactions are typically governed by rules that facilitate or guarantee orderly execution of these business processes. Depending on the nature of a transaction, the rules may range from basic to highly complex. Availability of these rules to the parties involved in a transaction is crucial. The execution of a transaction, governed by these rules, is typically documented, to generate a record of the transaction. US 2017/352012 A1 provides secure processing of electronic transactions by a decentralized, distributed ledger system. Imran Bashir: "Mastering Blockchain", In: "Mastering Blockchain" 17 March 2017 (2017-03-17), Packt Publishing, XP055393678, ISBN: 978-1-78712-544-5 provides discussion of distributed ledgers, decentralization and smart contracts. Joseph Poon ET AL: "Plasma: Scalable Autonomous Smart Contracts", 11 August 2017 (2017-08-11), XP055491638, Retrieved from the Internet: URL:https://plasma.io/plasma.pdf provides discussion of scalable autonomous smart contracts.

### SUMMARY

The invention is defined in the appended claims. In general, in one aspect, one or more embodiments relate to a method for overseeing execution of graph-based contracts using hash chains, comprising obtaining a graph-based contract, wherein the graph-based contract is configured to enforce a contract for performing a transaction between at least two parties, and obtaining event data associated with an execution of the graph-based contract. The method further includes performing, governed by the graph-based contract, a first state transition from a first state to a second state by making a determination that a first state transition criterion is met by the event data, wherein the first state transition connects the second state to the first state, and based on the determination transitioning to the second state. The method also includes appending a first block to a hash chain, wherein the first block comprises a documentation of the first state transition.

In general, in one aspect, one or more embodiments relate to a system for overseeing execution of graph-based contracts using hash chains, the system comprising a computer processor, and a contract processing engine executing on the computer processor configured to obtain a graph-based contract, wherein the graph-based contract is configured to enforce a contract for performing a transaction between at least two parties, and obtain event data associated with an execution of the graph-based contract. The contract processing engine is further configured to perform, governed by the graph-based contract, a first state transition from a first state to a second state by making a determination that a first state transition criterion is met by the event data, wherein the first state transition connects the second state to the first state, and based on the determination transitioning to the second state. The system further includes a hash chain processing engine executing on the computer processor configured to append a first block to a hash chain, wherein the first block comprises a documentation of the first state transition, and a hash chain repository storing the hash chain.

In general, in one aspect, one or more embodiments relate to a non-transitory computer readable medium including computer readable program code for causing a computer system to obtain a graph-based contract, wherein the graph-based contract is configured to enforce a contract for performing a transaction between at least two parties, and obtain event data associated with an execution of the graph-based contract. The computer readable program code further causes the computer system to perform, governed by the graph-based contract, a first state transition from a first state to a second state by: making a determination that a first state transition criterion is met by the event data, wherein the first state transition connects the second state to the first state, and based on the determination transitioning to the second state. The computer readable program code further causes the computer system to append a first block to a hash chain, wherein the first block comprises a documentation of the first state transition.

Other aspects of the invention will be apparent from the following description and the appended claims.

### BRIEF DESCRIPTION OF DRAWINGS

FIG. 1 shows a system for overseeing execution of graph-based contracts using hash chains in accordance with one or more embodiments of the invention.
FIG. 2A shows an exemplary graph-based contract in accordance with one or more embodiments of the invention.
FIG. 2B shows an exemplary hash chain in accordance with one or more embodiments of the invention.
FIG. 3A shows a hash chain in accordance with one or more embodiments of the invention.
FIG. 3B shows the generation of a fingerprint from a block of a hash chain in accordance with one or more embodiments of the invention.
FIGs. 4, 5, and 6 show flowcharts in accordance with one or more embodiments of the invention.
FIGs. 7A and 7B show computing systems in accordance with one or more embodiments of the invention.

### DETAILED DESCRIPTION

Specific embodiments of the invention will now be described in detail with reference to the accompanying figures. Like elements in the various figures are denoted by like reference numerals for consistency.

In the following detailed description of embodiments of the invention, numerous specific details are set forth in order to provide a more thorough understanding of the invention. However, it will be apparent to one of ordinary skill in the art that the invention may be practiced without these specific details. In other instances, well-known features have not been described in detail to avoid unnecessarily complicating the description.

Throughout the application, ordinal numbers (*e.g*., first, second, third, etc.) may be used as an adjective for an element (*i.e.,* any noun in the application). The use of ordinal numbers is not to imply or create any particular ordering of the elements nor to limit any element to being only a single element unless expressly disclosed, such as by the use of the terms "before", "after", "single", and other such terminology. Rather, the use of ordinal numbers is to distinguish between the elements. By way of an example, a first element is distinct from a second element, and the first element may encompass more than one element and succeed (or precede) the second element in an ordering of elements.

Further, although the description includes a discussion of various embodiments of the invention, the various disclosed embodiments may be combined in virtually any manner. All combinations are contemplated herein.

In general, embodiments of the invention provide a method and a system for overseeing execution of graph-based contracts using hash chains. The method may be used for business processes that involve two or more parties. Such business processes may include, but are not limited to, sales order generation, quoting, invoicing, billing, shipping, lead generation, accounting, item management, asset tracking, or combinations thereof. These business processes are typically governed by rules that facilitate or guarantee orderly execution of these business processes. Rules may be interdependent, *e.g.,* in a causal manner, and the combination of a set of interdependent rules forms a contract, in accordance with one or more embodiments of the invention. A contract, once established between two or more parties, may be used to guide or enforce transactions between these parties. Contracts may be particularly important if the participating parties are non-trusting organizations.

In one or more embodiments of the invention, contracts are represented by graphs. As further discussed below, a graph represents rules of a business process using conditional connections between states. A state in a graph represents a certain state of a business transaction. Exemplary states include, but are not limited to, "order received", "articles selected", "shipment ready", etc. Conditional connections allow the transition from one state to another. For example, the current state may advance from "articles selected" to "shipment ready" once a confirmation has been received, indicating that the selected articles have been combined to form the shipment to the customer.

Use of a graph in lieu of coding the set of rules may facilitate evaluation of rules or questions by users, in particular in scenarios in which contracts are complex and conditional. As will be demonstrated based on various examples, the use of graphs enables the modeling of complex business processes using a small amount of data, encoded in these charts, in accordance with one or more embodiments of the invention. While embodiments of the invention are primarily discussed in context of finance and accounting, those skilled in the art will appreciate that embodiments of the invention are equally applicable to other domains in which transactions are performed between multiple parties.

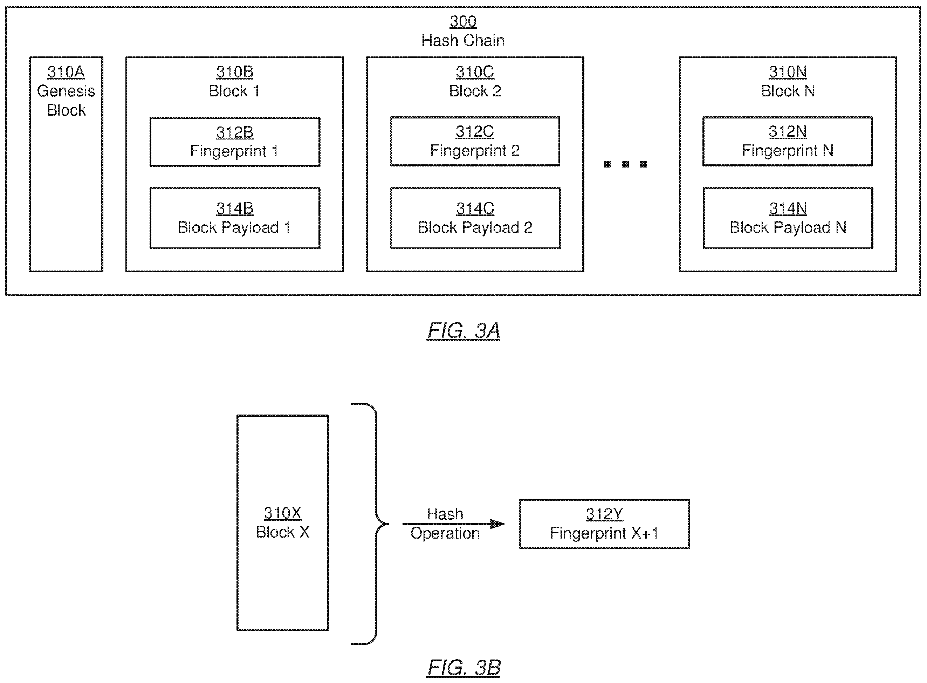

As a business process is executed, it may be desirable to document the states reached during the execution of the business process. This may include documentation of the reaching of states, timestamps of events (such as when a state is reached), parties involved, and any other information considered relevant. In one or more embodiments of the invention, executions of business processes are documented in hash chains. A hash chain may include a series of blocks. Each block may document one or more events or transactions (such as when a state is reached). In one or more embodiments of the invention, each block further includes a fingerprint of the previous block in the hash chain. This fingerprint uniquely identifies the previous block and, thus, enforces an order of the blocks in the hash chain. The hash chains used for documenting business processes may be stored in the form of a public ledger, or they may be kept confidential. Further, the hash chains may be stored in a distributed manner, thereby establishing a distributed consensus system, making it difficult or even impossible to alter or falsify transactions stored in the hash chains. A detailed description of hash chains is provided below with reference to FIGs. 3A and 3B.

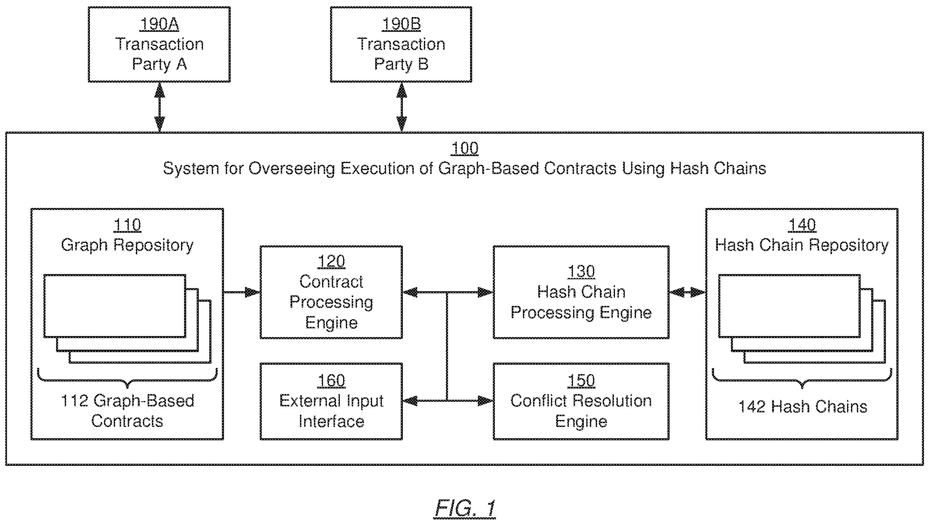

Turning to FIG. 1, a system for overseeing the execution of graph-based contracts using hash chains, in accordance with one or more embodiments of the invention, is shown. The system (100) may include a graph repository (110), a contract processing engine (120) a hash chain processing engine (130) a hash chain repository (140), a conflict resolution engine (150) and an external input interface (160). Each of these components is described below. The system (100) may be used by transaction parties (190A, 190B), as subsequently discussed.

In one or more embodiments of the invention, multiple parties conduct a transaction that is governed by certain rules associated with the transaction. The system (100) is configured to enforce these rules based on a contract, thereby enabling proper completion of the transaction, even in case of distrustful parties. While FIG. 1 shows an example involving two transaction parties (190A, 190B), any number of parties may participate in the transaction, without departing from the invention.

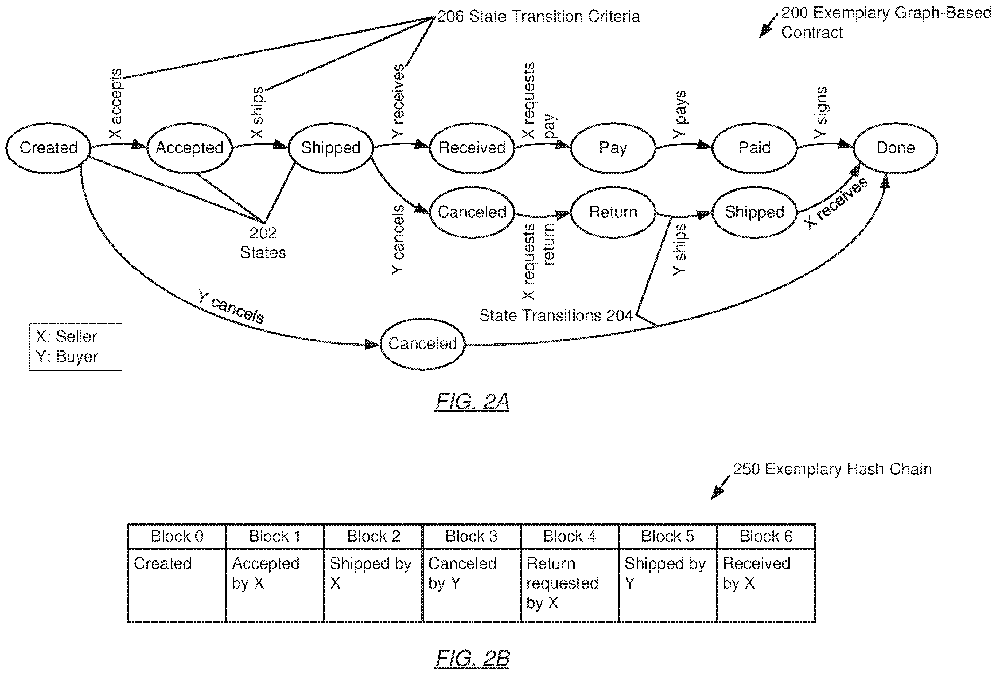

The graph repository (110), in accordance with one or more embodiments of the invention, stores graph-based contracts (112). Each graph-based contract may specify rules that are to be applied when a particular transaction or group of transactions is executed. A detailed description of the implementation of rules using graph-based contracts is provided below with reference to FIG. 2A. The database used for the graph repository may be implemented using any format suitable for the storage of graph-based contracts. The graph repository (110) may be stored in non-volatile or volatile memory, *e.g.* on a hard disk drive or in RAM.

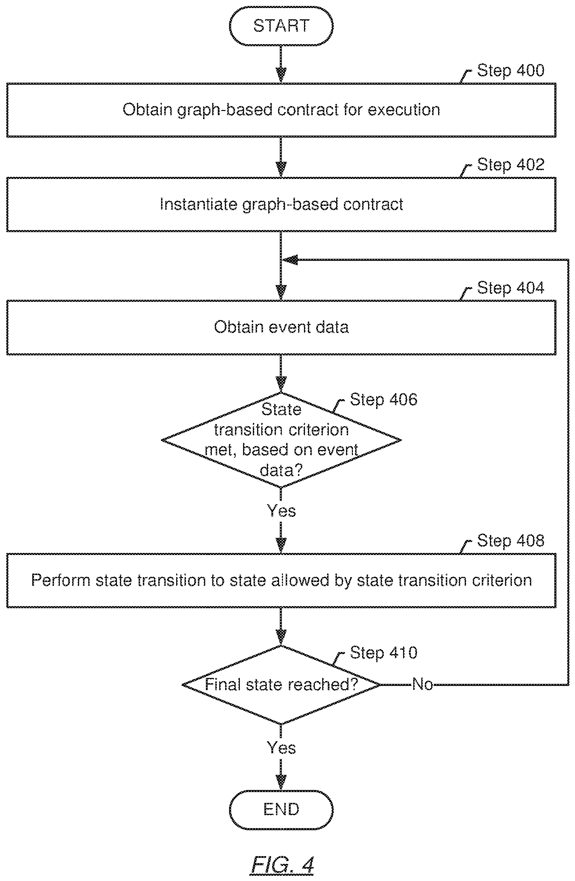

The contract processing engine (120), in accordance with one or more embodiments of the invention, includes a set of machine-readable instructions (stored on a computer-readable medium) which, when executed by the system (100) oversee the execution of the contract, as specified by the rules of the graph-based contract. Accordingly, the contract processing engine (120), in accordance with one or more embodiments of the invention, controls the progress toward fulfilling the contract. A detailed description of the operations performed by the contract processing engine (120) is provided in the flowchart of FIG. 4.

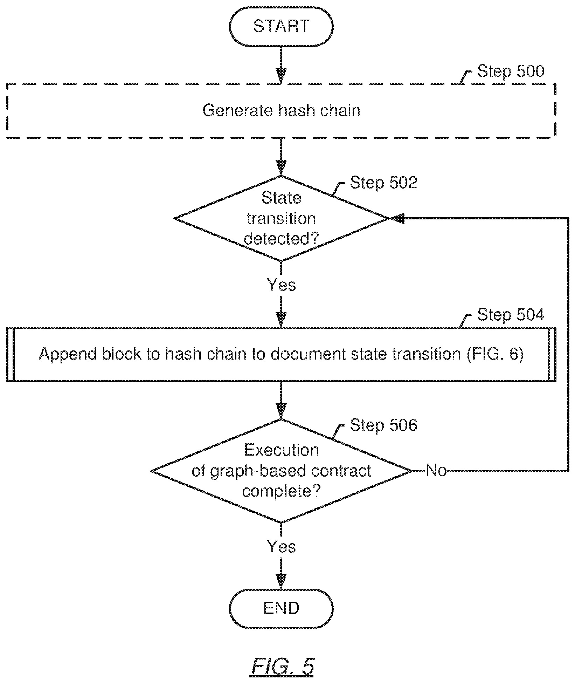

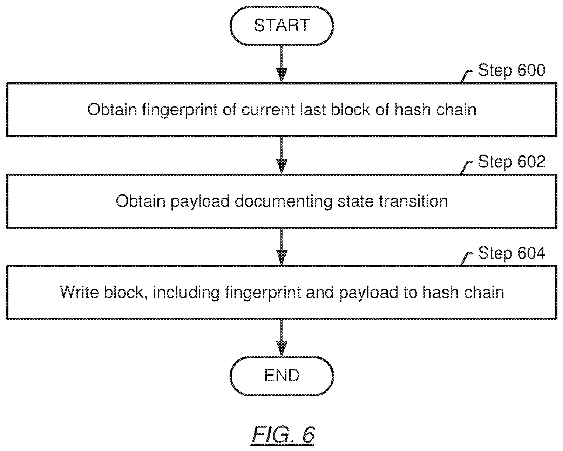

The hash chain processing engine (130), in accordance with one or more embodiments of the invention, includes a set of machine-readable instructions (stored on a computer-readable medium) which, when executed by the system (100) document the progression of the contract execution, based on input provided by the contract processing engine (120). For, example, whenever a new state, as specified in the graph-based contract, is reached, the hash chain processing engine may update a hash chain to document the newly reached state. A detailed description of the operations performed by the hash chain processing engine (130) is provided in the flowcharts of FIGs. 5 and 6.

The hash chain repository (140), in accordance with one or more embodiments of the invention, stores hash chains (142). Each hash chain may document the progression of the execution of a particular graph-based contract. A single hash chain may be used to document the execution of multiple graph-based contracts, e.g., if multiple contracts are related. Further, the execution of unrelated graph-based contracts may also be documented in a single hash chain. A detailed description of the structure of hash chains is provided below with reference to FIGs. 3A and 3B. The database used for the hash chain repository may be implemented using any format suitable for the storage of hash chains. The hash chain repository (140) may be stored in non-volatile or volatile memory, *e.g.* on a hard disk drive or in RAM.

In one or more embodiments of the invention, the hash chain repository is distributed and includes multiple copies of the same hash chains. While these copies may be synchronized, they may be separately maintained, thereby establishing a distributed consensus system in which a bad actor would have to simultaneously alter the majority of the copies in order to make an unauthorized change to an earlier block of the hash chain. This distributed implementation may make it nearly impossible to make an unauthorized modification to a previously written block of a hash chain.

The conflict resolution engine (150), in accordance with one or more embodiments of the invention, includes a set of machine-readable instructions (stored on a computer-readable medium) which, when executed by the system (100) addresses conflicts as the may occur, for example, when conflicting information that would result in a different execution of the graph-based contract, is detected. A typical conflict is, for example, the reporting of completion of one step of a transaction by one party, while another party disagrees. The detection and resolution of conflicts is discussed below with reference to FIG. 4.

The external input interface (160), in accordance with one or more embodiments of the invention, enables the system (100) to access external resources to obtain information from sources different from the transaction parties (190A, 190B). Any type of resource that provides information relevant to the execution of a graph-based contract may be accessed. Such resources may be, for example, accounting databases, government records, etc. Input obtained by the external input interface may further be used by the conflict resolution engine (150).

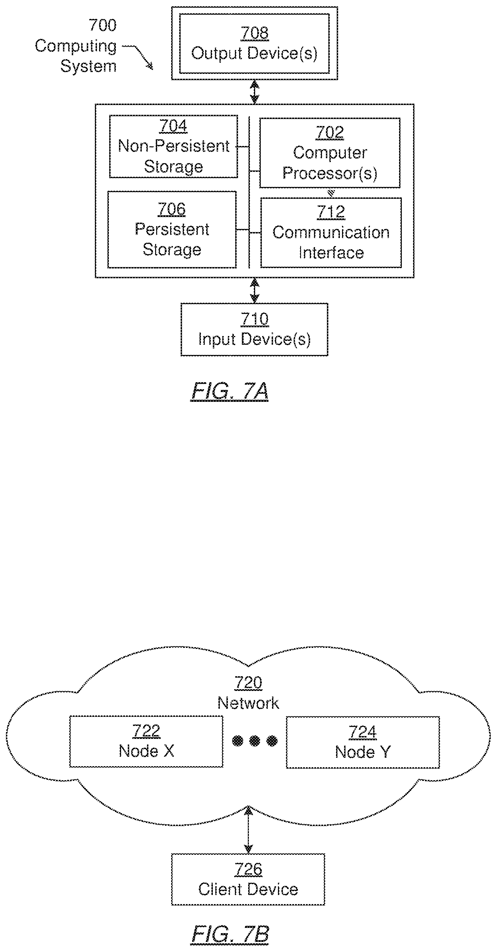

Embodiments of the invention may be implemented on one or more computing systems that may be similar to the computing system introduced in FIGs. 7A and 7B. As previously noted, a graph-based contract may be shared among transaction parties. Accordingly, the execution of the graph-based contract may also be performed in a distributed manner. The distributed graph-based contracts may be synchronized during the execution of the subsequently described methods. Similarly, as previously noted, hash chains may exist in multiple copies. For example, the transaction parties may each hold a copy, and third parties may hold additional copies. These multiple copies may also be synchronized during the execution of the subsequently described methods.

While FIG. 1 shows a configuration of components, other configurations may be used without departing from the scope of the invention. For example, various components may be combined to create a single component. As another example, the functionality performed by a single component may be performed by two or more components that may be communicatively connected using a network connection.

Turning to FIG. 2A, an exemplary graph-based contract, in accordance with one or more embodiments of the invention, is shown. The graph-based contract may be a directed acyclic graph in which nodes (which represent states) are directionally connected to obtain a chain of states. A graph-based contract may include any number of states, as necessitated by the nature of the contract. The exemplary graph-based contract (200) shown in FIG. 2A includes eleven states (202). These states (202) are sequentially connected by state transitions (204). A state transition may allow the progression from one state to the next state, either based on a state transition criterion (206) being met, or without requiring a particular state transition criterion. Branching may exist in case of multiple state transition criteria for state transitions from a current state to different subsequent states. Such state transition criteria may be evaluated as true or false. Assume, for example, that the current state in the exemplary graph-based contract (200) is "created". This may be the case after a purchase order for a set of widgets has been submitted by buyer Y to seller X. Two possible subsequent states "accepted" and "canceled" exist. Which one of these states is accessed depends on which one of the state transition criteria is met. If X accepts the purchase order submitted by Y, the state transition criterion "X accepts" may be evaluated as "true", and the state "accepted" may, thus, become the current state. If, in contrast, Y cancels the purchase order prior to X having accepted the purchase order, the state "canceled" may become the current state.

While the exemplary graph-based contract only includes a limited number and variety of states (202), state transitions (204) and state transition criteria (206), those skilled in the art will appreciate that graph-based contracts may include any number of states, state transitions and state transition criteria. Rules of an underlying contract are, thus, graphically implemented as conditional statements. These rules may cover, but are not limited to, for example, late fees, general terms and conditions, fees, fines and may apply to subscriptions, services, major purchases, damages, late fees, extensions, etc.

States, state transitions and state transition criteria may be tagged with human-readable expressions, *e.g.* English language descriptions, *e.g.,* phrases or sentences, as shown in FIG. 2A. Accordingly, while the graph-based contract is suitable for machine-execution, a user examining the chart may also be able to determine, by visual inspection, requirements to be met in order progress to a certain state. This may enable a user to independently assess available options at any point during the execution of the graph-based contract. For example, if buyer Y asks the question whether the submitted purchase order can still be canceled, she may quickly find the answer upon inspection of the chart: The purchase order may be canceled prior to X having accepted the purchase order (current state "created"), but also after the shipment of the order (current state "shipped").

In one or more embodiments of the invention, the graphical implementation of contracts supports complex processes and enables laymen to graphically compose contracts, without requiring a software programming background. A graph-based contract may be established or edited using graphical programming, *e.g.,* by sequentially combining states that may be obtained from a library, and by interconnecting these states using state transitions configured to include the desired state transition criteria. Additionally or alternatively, a graph-based contract may be generated from a customizable template. This template may be tailored to meet specific contractual requirements prior to instantiation.

As previously noted, the execution of graph-based contracts, in accordance with one or more embodiments of the invention is documented using hash chains. The resulting data changes and progression may thus be captured by hash chains, thereby establishing a history, as subsequently discussed.

FIG. 2B shows an exemplary hash chain (250) that resulted from one specific interaction between buyer Y and seller X, governed by the exemplary graph-based contract (200). Inspection if the exemplary hash chain (250) shows that in this particular interaction, a purchase order was created (block 0). The purchase order was accepted by X (block 1), the ordered items were shipped by X (block 2), but subsequently the purchase order was canceled by Y (block 3). As a result, a return of the ordered items was requested by X (block 4), the items were shipped for return by Y (block 5) and received by X (block 6). This basic exemplary hash chain (250) illustrates the documentation of one possible execution of the exemplary graph-based contract (200). Those skilled in the art will appreciate that the documentation provided by hash chains may include additional details that enable comprehensive tracking of the execution of graph-based contracts. FIGs. 3A and 3B provide a comprehensive discussion of hash chains in accordance with one or more embodiments of the invention.

FIG. 3A shows a hash chain, in accordance with one or more embodiments of the invention. The hash chain (300) includes N blocks (*e.g.,* 310B, 310C, 310N) and may further include a genesis block (310A). Each of the blocks (*e.g.,* 310B, 310C, 310N) may be used to document one or more steps performed during a transaction that is governed by a graph-based contract (200). The genesis block (310A) may establish the beginning of the hash chain and does not necessarily contain transaction-related documentation.

In one or more embodiments of the invention, blocks (*e.g.,* 310B, 310C, 310N) include block payloads (*e.g*., 314B, 314C, 314N). The payload may include documentation resulting from the execution of a graph-based contract (200). The payload may include, for example, a documentation of the reached state, how a state transaction criterion was met in order to reach the state, timestamps, a documentation of the transaction party that was involved in reaching the state, data entered in conjunction with reaching a state, etc. The payload may further include comments submitted by the transaction parties, conflict resolution information if a conflict was initially detected, etc. Consider, for example, that in the graph-based contract of FIG. 2A, the state "shipped" is reached. The documentation, in this case, may include a shipping destination address, a carrier, delivery instructions, a particular shipping mode, cost, a return address, telephone contact information, an identifier of the employee initiating the shipment, etc.

In one or more embodiments of the invention, blocks (*e.g.,* 310B, 310C, 310N) further include fingerprints (*e.g*., 312B, 312C, 310N). A fingerprint that is stored as part of a particular block, in accordance with an embodiment of the invention, is a unique identifier for the block immediately prior to the block that includes the fingerprint. For example, block 2 (310C) includes a fingerprint of block 1 (310B), and block 1 (310B) includes a fingerprint of the genesis block (310A).

FIG. 3B shows the generation of a fingerprint from a block of a hash chain, in accordance with one or more embodiments of the invention, using a hash operation. A fingerprint X+1 (312Y) is generated from a block X (310X) using a hash operation, in accordance with an embodiment of the invention. Accordingly, a fingerprint is a cryptographic identifier of the previous block. For example, in FIG. 3A, fingerprint 2 (312C) unambiguously identifies block 1 (310B). Embedding the fingerprint in the block enables the organization of blocks in a chain, in which blocks sequentially depend from the respective preceding blocks. A fingerprint may be any combination of characters and/or numbers that is likely to be unique for a block from which it was generated. In one embodiment of the invention, a fingerprint is a hash (for example an SHA-1 or SHA-2 hash) of the block that it is associated with. Because a fingerprint of a block is incorporated in the subsequent block, no block in the hash chain may be altered without affecting the most recent block. Specifically, any change of one or more of the blocks (*e.g.,* 310A, 310B, 310C in FIG. 3A) will necessarily result in a different fingerprint N (312N) of block N (310N). Any change anywhere in the hash chain, thus, inevitably results in a fingerprint of the most recent block being altered.

A hash chain may be dedicated to documenting a single execution of a graph-based contract, or it may document multiple transactions, *e.g.,* related transactions. In one or more embodiments of the invention, multiple copies of the same hash chain may coexist. For example, each party, but also other entities may have a copy of the hash chain. Under normal circumstances, these multiple hash chains are identical, even though they are separately maintained. Conflicts may arise if different parties add conflicting blocks to the chain. Consider, for example, a scenario, in which a shipment is indicated as having been received, based on the carrier's confirmation. However, the recipient claims that the no shipment has been received. If blocks are separately generated based on these conflicting pieces of information, a conflict is necessarily detected once the separately maintained hash chains are checked for consistency. A conflict resolution may be performed in order to determine the correct block to be added to the hash chain.

Maintaining multiple/many copies of a hash chain, in accordance with an embodiment of the invention, makes the hash chain resilient to damage or attacks such as the unauthorized editing of earlier blocks, due to the fingerprints that are propagated from block to subsequent block through the hash chain. Any such change would necessarily result in a detectable change in the most recent block and would thus be detectable. An attacker would thus have to consistently alter the majority or all copies of the hash chain in order to credibly demonstrate that the change is legitimate. Depending on the number of existing copies, and assuming that the majority of participants that hold copies is honest, this may be considered impossible.

In view of the above, the use of hash chains to document the execution of a graph-based contract, or broadly speaking, a business process, in accordance with one or more embodiments of the invention, provides a method to reliably document any type of transaction, even when the participants are non-trusting parties, in a shared manner.

FIGs. 4-6 show flowcharts in accordance with one or more embodiments of the invention. While the various steps in these flowcharts are provided and described sequentially, one of ordinary skill will appreciate that some or all of the steps may be executed in different orders, may be combined or omitted, and some or all of the steps may be executed in parallel. Furthermore, the steps may be performed actively or passively. For example, some steps may be performed using polling or be interrupt driven in accordance with one or more embodiments of the invention. By way of an example, determination steps may not require a processor to process an instruction unless an interrupt is received to signify that condition exists in accordance with one or more embodiments of the invention. As another example, determination steps may be performed by performing a test, such as checking a data value to test whether the value is consistent with the tested condition in accordance with one or more embodiments of the invention.

Turning to FIG. 4, a method for overseeing the execution of graph-based contracts is shown. The method may be executed whenever a graph-based contract between two or more parties is to be executed.

In Step 400, a graph-based contract is obtained for execution. The graph-based contract may be obtained from a graph repository, or alternatively it may be composed by a user or administrator immediately prior to the instantiation of the graph-based contract. The graph-based contract that is obtained in Step 400 is selected to be suitable for the purpose required by the participating transaction parties. For example, a graph-based contract for the processing of purchase orders may be obtained in Step 400 if one of the transaction parties is a buyer submitting a purchase order, and another transaction party is the seller receiving the purchase order. In contrast, a graph-based rental agreement may be obtained in Step 400 if one of the transaction parties is a prospective tenant and another one of the transaction parties is a landlord.

In Step 402, the obtained graph-based contract is instantiated. Instantiation may include, for example, setting the graph-based contract to an initial state, and/or obtaining the state transition criteria. For example, the graph-based contract obtained in Step 400 may only provide a framework that still needs to be populated with information specific to the applicable scenario. Consider, for example, a graph-based contract that includes state transitions that are based on dates and $-amounts, without specifying these dates and $-amounts. During the instantiation, these dates and $-amounts are obtained, to enable execution of the graph-based contract. Subsequently, the execution of the graph-based contract may begin.

In Step 404, event data is obtained. Event data, in accordance with an embodiment of the invention, is any data that may affect the execution of the graph-based contract. Event data, thus, may include an input provided by one of the transaction parties, but also externally obtained data, e.g., data obtained from a database, from a hash chain, or from elsewhere. Event data is not necessarily always received. Accordingly, if no new event data is available, Step 404 may be skipped.

In Step 406, a determination is made about whether a state transition criterion is met, based on the event data. Only if a state transition criterion is met, the next state, accessible via the state transition that is allowed by the state transition criterion may be reached. Branching may be possible, if multiple state transitions to different states are implemented. Consider, for example, the calculation of a discount and assume that no discount is provided if the purchasing total is below $1,000, a 5% discount is provided for $1,000 < purchasing total < $5,000, and a 10% discount is provided for purchasing totals beyond $5,000. Depending on the purchasing total, the next state may, thus, be a state that applies no discount, a 5% discount, or a 10% discount. In this example, the determination may be made based on data available from a previously received purchase order, from where the purchasing total may be obtained. Further, consider another scenario that requires a minimum purchasing total prior to allowing the checkout of purchased goods. In this scenario, there may only be a single next state, which may only be reached if the minimum purchasing total is met. A state transition may alternatively not be controlled by a state transition criterion. In such a case, the next state may be reached without the need to satisfy a state transition criterion.

If a determination is made that the state transition criterion is met, the method may proceed to Step 408, where the state transition to the state that is allowed by the state transition criterion is performed.

In Step 410, a determination is made about whether a final state has been reached. If the final state has not yet been reached, the execution of the method may return to Step 404 to evaluate the next state transition criterion, based on the available event data. However, if the final state has been reached, the execution of the method may terminate.

In one or more embodiments of the invention, at any time during the execution of the method of FIG. 4, a conflict resolution may be performed. The conflict resolution may become necessary when one or more events occur, for which no appropriate state transition is currently implemented, or when the transaction parties disagree on a current state. Consider, for example, a contract covering a purchase, for which no time horizon for the payment after receipt of an order is specified. Party A (the buyer) may assume that the payment is due in one month, whereas party B (the seller) may assume that the payment is due within ten days of the receipt of the order. This may result in disagreement whether the payment was received in a timely manner or not, and a conflict may be triggered by the seller complaining about not having received the payment in a timely manner. In other scenarios, a conflict may be triggered by an event for which no appropriate state transition is available. In either one of these scenarios, the conflict resolution engine, once made aware of the conflict based on input by one of the parties and/or based on the detection of an event without an appropriate state transition, may rely on user input to address the conflict. The user input may be provided by one or more of the parties, or by a neutral third party. For example, in the previously discussed scenario, the seller may accept a one month time horizon for payment to resolve the conflict, and the execution of the graph-based contract may continue, once this conflict resolution has been provided by the user(s) to the conflict resolution engine. In one or more embodiments of the invention, subsequently, the conflict resolution engine modifies the graph-based contract to include this conflict resolution. In the above example, the graph-based contract would be modified to include a ten-day payment target, which would otherwise trigger a cancellation of the purchase, a late fee, etc.

While the method of FIG. 4 is executed to perform a transaction according to the rules specified by the graph-based contract, the method described in FIG. 5 may be executed simultaneously to document the execution of the graph-based contract. Turning to FIG. 5, a method for documenting the execution of a graph-based contract, is shown. At least some of the described steps may be executed whenever a state transition, as described in FIG. 4, is detected.

In Step 500, a hash chain is generated. The execution of Step 500 is optional. For example, Step 500 may not be executed if the subsequently described steps are performed on an existing hash chain. Generation of the hash chain may include generating a genesis block of the hash chain. The genesis block may form the initial block from which a fingerprint may be generated when appending a block, as described in FIG. 6.

In Step 502, a determination is made about whether a state transition has been detected. A state transition may be detected whenever Step 406 of FIG. 4 is performed. If a state transition is detected, the method may proceed to Step 504.

In Step 504, a block is appended to the hash chain in order to document the state transition. A detailed description of Step 504 is provided in FIG. 6.

In Step 506, a determination is made about whether the execution of the graph-based contract, as described in FIG. 4, has been completed. If the execution has not been completed, the method may return to Step 502 to perform document additional state transitions, as they may occur. The execution of the method may terminate, if it is concluded that the method described in FIG. 4 has completed execution.

Turning to FIG. 6, a method for appending a block to a hash chain, in accordance with one or more embodiments of the invention, is shown.

In Step 600, a fingerprint of the current last block of the hash chain is obtained. The fingerprint may be obtained by performing a hash operation, as previously described with reference to FIG. 3B. The current last block may be the genesis block of the hash chain, if the method of FIG. 6 is performed on a hash chain for the first time. Otherwise, the current last block may be a block that was generated during a previous execution of the method of FIG. 6.

In Step 602, the payload to be included in the block that is being added to the hash chain is obtained. The payload, in accordance with one or more embodiments of the invention, includes a documentation of the state transition that triggered the execution of the methods of FIGs. 5 and 6. The documentation may include various elements, as previously described with reference to FIG. 3A.

In Step 604, a new block is written to the hash chain. The new block is formed by the payload obtained in Step 602 and the fingerprint obtained in Step 600. The newly appended block establishes the new end of the hash chain, where an additional block may be appended at a later time. Due to the embedded fingerprint of the previous block, the order of blocks, added by repeated execution of the method of FIG. 6, is unambiguously established.

Various embodiments of the invention have one or more of the following advantages. Embodiments of the invention enable collaborative models of conducting business in which objects (*e.g*., transaction records, accounting histories, etc.) are exposed via a shared platform that enables a history or documentation to be maintained. This distinguishes embodiments of the invention from the traditional approach in which businesses operate in a defensive manner to not trust each other to ensure the books are maintained correctly. Traditionally, their systems, processes, and employees are honed to operate independently because technology has not enabled a model allowing for the sharing of common entities in a manner that can enable trust.

In one or more embodiments of the invention, a business process is guided by a graph-based contract and may progress as specified by the rules of the graph-based contract, without requiring human intervention. The graph-based representation of a business process enables automation of the business process in a transparent yet machine-enforceable manner. The terms of the contract can be seen, reviewed, explained and agreed upon by visual inspection of the graph-based contract, rather than forcing a user to analyze code.

A graph-based contract may be shared across the nodes that participate in a transaction, and transactions performed as specified by the graph-based contract may be recorded in a shared ledger that is represented by one or more hash chains.

Using embodiments of the invention, business process can be automated (or executed programmatically) by virtue of the shared graph-based contract and the shared hash chain(s). The transaction history that is maintained using the hash chain(s) may ensure that each step, changes and progress are fully documented and explainable at any point. A complete history of activities associated with the execution of the graph-based contract is, thus, available. Embodiments of the invention therefore have the potential to eliminate gaps that in traditional approaches may cause misunderstandings, disputes or even fraud. Disputes may be resolved based on the comprehensive documentation provided by the hash chains and the framework or rules established by the graph-based contract. By maintaining multiple copies of a hash chain, unauthorized modifications to previously written blocks become difficult or near impossible, because any deviation in one copy of the hash chain would be recognizable when comparing the modified copy against other copies of the hash chain. Accordingly, transactions documented in accordance with one or more embodiments of the invention are safeguarded against error and fraud, and the system itself may detect anomalies or exceptions.

One or more embodiments of the invention are suitable for the automation of a broad range of interactions between parties. These interactions include, but are not limited to business transaction such as sales order generation, quoting, invoicing, billing, shipping, accounting, asset tracking, etc. The automation and security provided by embodiments of the invention enables employees to focus on other tasks where human interaction remains desirable, such as customer service.

Embodiments of the invention may be implemented on a computing system. Any combination of mobile, desktop, server, router, switch, embedded device, or other types of hardware may be used. For example, as shown in FIG. 7A, the computing system (700) may include one or more computer processors (702), non-persistent storage (704) (*e.g.,* volatile memory, such as random access memory (RAM), cache memory), persistent storage (706) (*e.g.,* a hard disk, an optical drive such as a compact disk (CD) drive or digital versatile disk (DVD) drive, a flash memory, etc.), a communication interface (712) (*e.g.,* Bluetooth interface, infrared interface, network interface, optical interface, etc.), and numerous other elements and functionalities.

The computer processor(s) (702) may be an integrated circuit for processing instructions. For example, the computer processor(s) may be one or more cores or micro-cores of a processor. The computing system (700) may also include one or more input devices (710), such as a touchscreen, keyboard, mouse, microphone, touchpad, electronic pen, or any other type of input device.

The communication interface (712) may include an integrated circuit for connecting the computing system (700) to a network (not shown) (*e.g*., a local area network (LAN), a wide area network (WAN) such as the Internet, mobile network, or any other type of network) and/or to another device, such as another computing device.

Further, the computing system (700) may include one or more output devices (708), such as a screen (*e.g.,* a liquid crystal display (LCD), a plasma display, touchscreen, cathode ray tube (CRT) monitor, projector, or other display device), a printer, external storage, or any other output device. One or more of the output devices may be the same or different from the input device(s). The input and output device(s) may be locally or remotely connected to the computer processor(s) (702), non-persistent storage (704), and persistent storage (706). Many different types of computing systems exist, and the aforementioned input and output device(s) may take other forms.

Software instructions in the form of computer readable program code to perform embodiments of the invention may be stored, in whole or in part, temporarily or permanently, on a non-transitory computer readable medium such as a CD, DVD, storage device, a diskette, a tape, flash memory, physical memory, or any other computer readable storage medium. Specifically, the software instructions may correspond to computer readable program code that, when executed by a processor(s), is configured to perform one or more embodiments of the invention.

The computing system (700) in FIG. 7A may be connected to or be a part of a network. For example, as shown in FIG. 7B, the network (720) may include multiple nodes (*e.g*., node X (722), node Y (724)). Each node may correspond to a computing system, such as the computing system shown in FIG. 7A, or a group of nodes combined may correspond to the computing system shown in FIG. 7A. By way of an example, embodiments of the invention may be implemented on a node of a distributed system that is connected to other nodes. By way of another example, embodiments of the invention may be implemented on a distributed computing system having multiple nodes, where each portion of the invention may be located on a different node within the distributed computing system. Further, one or more elements of the aforementioned computing system (700) may be located at a remote location and connected to the other elements over a network.

Although not shown in FIG. 7B, the node may correspond to a blade in a server chassis that is connected to other nodes via a backplane. By way of another example, the node may correspond to a server in a data center. By way of another example, the node may correspond to a computer processor or micro-core of a computer processor with shared memory and/or resources.

The nodes (*e.g.,* node X (722), node Y (724)) in the network (720) may be configured to provide services for a client device (726). For example, the nodes may be part of a cloud computing system. The nodes may include functionality to receive requests from the client device (726) and transmit responses to the client device (726). The client device (726) may be a computing system, such as the computing system shown in FIG. 7A. Further, the client device (726) may include and/or perform all or a portion of one or more embodiments of the invention.

The computing system or group of computing systems described in FIG. 7A and 7B may include functionality to perform a variety of operations disclosed herein. For example, the computing system(s) may perform communication between processes on the same or different system. A variety of mechanisms, employing some form of active or passive communication, may facilitate the exchange of data between processes on the same device. Examples representative of these inter-process communications include, but are not limited to, the implementation of a file, a signal, a socket, a message queue, a pipeline, a semaphore, shared memory, message passing, and a memorymapped file. Further details pertaining to a couple of these non-limiting examples are provided below.

Based on the client-server networking model, sockets may serve as interfaces or communication channel end-points enabling bidirectional data transfer between processes on the same device. Foremost, following the client-server networking model, a server process (*e.g.,* a process that provides data) may create a first socket object. Next, the server process binds the first socket object, thereby associating the first socket object with a unique name and/or address. After creating and binding the first socket object, the server process then waits and listens for incoming connection requests from one or more client processes (*e.g*., processes that seek data). At this point, when a client process wishes to obtain data from a server process, the client process starts by creating a second socket object. The client process then proceeds to generate a connection request that includes at least the second socket object and the unique name and/or address associated with the first socket object. The client process then transmits the connection request to the server process. Depending on availability, the server process may accept the connection request, establishing a communication channel with the client process, or the server process, busy in handling other operations, may queue the connection request in a buffer until server process is ready. An established connection informs the client process that communications may commence. In response, the client process may generate a data request specifying the data that the client process wishes to obtain. The data request is subsequently transmitted to the server process. Upon receiving the data request, the server process analyzes the request and gathers the requested data. Finally, the server process then generates a reply including at least the requested data and transmits the reply to the client process. The data may be transferred, more commonly, as datagrams or a stream of characters (*e.g.*, bytes).

Shared memory refers to the allocation of virtual memory space in order to substantiate a mechanism for which data may be communicated and/or accessed by multiple processes. In implementing shared memory, an initializing process first creates a shareable segment in persistent or non-persistent storage. Post creation, the initializing process then mounts the shareable segment, subsequently mapping the shareable segment into the address space associated with the initializing process. Following the mounting, the initializing process proceeds to identify and grant access permission to one or more authorized processes that may also write and read data to and from the shareable segment. Changes made to the data in the shareable segment by one process may immediately affect other processes, which are also linked to the shareable segment. Further, when one of the authorized processes accesses the shareable segment, the shareable segment maps to the address space of that authorized process. Often, only one authorized process may mount the shareable segment, other than the initializing process, at any given time.

Other techniques may be used to share data, such as the various data described in the present application, between processes without departing from the scope of the invention. The processes may be part of the same or different application and may execute on the same or different computing system.

Rather than or in addition to sharing data between processes, the computing system performing one or more embodiments of the invention may include functionality to receive data from a user. For example, in one or more embodiments, a user may submit data via a graphical user interface (GUI) on the user device. Data may be submitted via the graphical user interface by a user selecting one or more graphical user interface widgets or inserting text and other data into graphical user interface widgets using a touchpad, a keyboard, a mouse, or any other input device. In response to selecting a particular item, information regarding the particular item may be obtained from persistent or non-persistent storage by the computer processor. Upon selection of the item by the user, the contents of the obtained data regarding the particular item may be displayed on the user device in response to the user's selection.

By way of another example, a request to obtain data regarding the particular item may be sent to a server operatively connected to the user device through a network. For example, the user may select a uniform resource locator (URL) link within a web client of the user device, thereby initiating a Hypertext Transfer Protocol (HTTP) or other protocol request being sent to the network host associated with the URL. In response to the request, the server may extract the data regarding the particular selected item and send the data to the device that initiated the request. Once the user device has received the data regarding the particular item, the contents of the received data regarding the particular item may be displayed on the user device in response to the user's selection. Further to the above example, the data received from the server after selecting the URL link may provide a web page in Hyper Text Markup Language (HTML) that may be rendered by the web client and displayed on the user device.

Once data is obtained, such as by using techniques described above or from storage, the computing system, in performing one or more embodiments of the invention, may extract one or more data items from the obtained data. For example, the extraction may be performed as follows by the computing system in FIG. 7A. First, the organizing pattern (*e.g*., grammar, schema, layout) of the data is determined, which may be based on one or more of the following: position (*e.g*., bit or column position, Nth token in a data stream, etc.), attribute (where the attribute is associated with one or more values), or a hierarchical/tree structure (consisting of layers of nodes at different levels of detail-such as in nested packet headers or nested document sections). Then, the raw, unprocessed stream of data symbols is parsed, in the context of the organizing pattern, into a stream (or layered structure) of tokens (where each token may have an associated token "type").

Next, extraction criteria are used to extract one or more data items from the token stream or structure, where the extraction criteria are processed according to the organizing pattern to extract one or more tokens (or nodes from a layered structure). For position-based data, the token(s) at the position(s) identified by the extraction criteria are extracted. For attribute/value-based data, the token(s) and/or node(s) associated with the attribute(s) satisfying the extraction criteria are extracted. For hierarchical/layered data, the token(s) associated with the node(s) matching the extraction criteria are extracted. The extraction criteria may be as simple as an identifier string or may be a query provided to a structured data repository (where the data repository may be organized according to a database schema or data format, such as XML).

The extracted data may be used for further processing by the computing system. For example, the computing system of FIG. 7A, while performing one or more embodiments of the invention, may perform data comparison. Data comparison may be used to compare two or more data values (*e.g.,* A, B). For example, one or more embodiments may determine whether A > B, A = B, A != B, A < B, etc. The comparison may be performed by submitting A, B, and an opcode specifying an operation related to the comparison into an arithmetic logic unit (ALU) (*i.e.,* circuitry that performs arithmetic and/or bitwise logical operations on the two data values). The ALU outputs the numerical result of the operation and/or one or more status flags related to the numerical result. For example, the status flags may indicate whether the numerical result is a positive number, a negative number, zero, etc. By selecting the proper opcode and then reading the numerical results and/or status flags, the comparison may be executed. For example, in order to determine if A > B, B may be subtracted from A (*i.e.,* A - B), and the status flags may be read to determine if the result is positive (*i.e.,* if A > B, then A - B > 0). In one or more embodiments, B may be considered a threshold, and A is deemed to satisfy the threshold if A = B or if A > B, as determined using the ALU. In one or more embodiments of the invention, A and B may be vectors, and comparing A with B requires comparing the first element of vector A with the first element of vector B, the second element of vector A with the second element of vector B, etc. In one or more embodiments, if A and B are strings, the binary values of the strings may be compared.

The computing system in FIG. 7A may implement and/or be connected to a data repository. For example, one type of data repository is a database. A database is a collection of information configured for ease of data retrieval, modification, re-organization, and deletion. Database Management System (DBMS) is a software application that provides an interface for users to define, create, query, update, or administer databases.

The user, or software application, may submit a statement or query into the DBMS. Then the DBMS interprets the statement. The statement may be a select statement to request information, update statement, create statement, delete statement, etc. Moreover, the statement may include parameters that specify data, or data container (database, table, record, column, view, etc.), identifier(s), conditions (comparison operators), functions (*e.g.* join, full join, count, average, etc.), sort (*e.g.* ascending, descending), or others. The DBMS may execute the statement. For example, the DBMS may access a memory buffer, a reference or index a file for read, write, deletion, or any combination thereof, for responding to the statement. The DBMS may load the data from persistent or non-persistent storage and perform computations to respond to the query. The DBMS may return the result(s) to the user or software application.

The computing system of FIG. 7A may include functionality to provide raw and/or processed data, such as results of comparisons and other processing. For example, providing data may be accomplished through various presenting methods. Specifically, data may be provided through a user interface provided by a computing device. The user interface may include a GUI that displays information on a display device, such as a computer monitor or a touchscreen on a handheld computer device. The GUI may include various GUI widgets that organize what data is shown as well as how data is provided to a user. Furthermore, the GUI may provide data directly to the user, *e.g.,* data provided as actual data values through text, or rendered by the computing device into a visual representation of the data, such as through visualizing a data model.

For example, a GUI may first obtain a notification from a software application requesting that a particular data object be provided within the GUI. Next, the GUI may determine a data object type associated with the particular data object, *e.g.,* by obtaining data from a data attribute within the data object that identifies the data object type. Then, the GUI may determine any rules designated for displaying that data object type, *e.g.,* rules specified by a software framework for a data object class or according to any local parameters defined by the GUI for presenting that data object type. Finally, the GUI may obtain data values from the particular data object and render a visual representation of the data values within a display device according to the designated rules for that data object type.

Data may also be provided through various audio methods. In particular, data may be rendered into an audio format and provided as sound through one or more speakers operably connected to a computing device.

Data may also be provided to a user through haptic methods. For example, haptic methods may include vibrations or other physical signals generated by the computing system. For example, data may be provided to a user using a vibration generated by a handheld computer device with a predefined duration and intensity of the vibration to communicate the data.

The above description of functions presents only a few examples of functions performed by the computing system of FIG. 7A and the nodes and/ or client device in FIG. 7B. Other functions may be performed using one or more embodiments of the invention.

While the invention has been described with respect to a limited number of embodiments, those skilled in the art, having benefit of this disclosure, will appreciate that other embodiments can be devised which do not depart from the scope of the invention as disclosed herein. Accordingly, the scope of the invention should be limited only by the attached claims.

## Claims

1. A method for overseeing execution of graph-based contracts using hash chains, comprising:
obtaining a graph-based contract, wherein the graph-based contract is configured to enforce a contract for performing a transaction between at least two parties;
obtaining event data associated with an execution of the graph-based contract;
performing, governed by the graph-based contract, a first state transition from a first state to a second state by:
making a determination that a first state transition criterion is met by the event data, wherein the first state transition connects the second state to the first state, and based on the determination transitioning to the second state; and
appending a first block to a hash chain, wherein:
the first block comprises a documentation of the first state transition, and a fingerprint;
the documentation of the first state transition comprises at least one selected from a group consisting of a time stamp, an identifier of at least one of the at least two parties, an identifier of the first state, and identifier of the second state, and the event data;
the fingerprint is a unique identifier for a previous block on the hash chain immediately prior to the first block; and
appending the first block to the hash chain comprises:
generating a fingerprint from the previous block on the hash chain using a hash operation; and
adding the fingerprint, along with the documentation of the first state transition, to the first block.

2. The method of claim 1, further comprising:
making a determination that a second state transition criterion, connecting a third state to the first state, is not met by the event data, and based on the determination blocking a transition to the third state.

3. The method of claim 1, further comprising:
making a determination that a second state transition criterion is met by the event data, and based on the determination performing a second state transition from the second state to a third state; and
appending a second block to the hash chain, wherein the second block comprises a documentation of the second state transition.

4. The method of claim 1, wherein the event data comprise at least one selected from a group consisting of an input by at least one of the at least two parties, data obtained from a database, data obtained from the hash chain, and data obtained from a second hash chain.

5. The method of claim 1, wherein the first block further comprises a hash value of a block immediately prior to the first block, in the hash chain.

6. The method of claim 1, wherein a plurality of copies of the hash chain is maintained.

7. The method of claim 1, wherein obtaining the graph-based contract comprises graphically composing the graph-based contract.

8. A system for overseeing execution of graph-based contracts using hash chains, the system comprising:
a computer processor;
a contract processing engine executing on the computer processor configured to:
obtain a graph-based contract, wherein the graph-based contract is configured to enforce a contract for performing a transaction between at least two parties;
obtain event data associated with an execution of the graph-based contract;
perform, governed by the graph-based contract, a first state transition from a first state to a second state by:
making a determination that a first state transition criterion is met by the event data, wherein the first state transition connects the second state to the first state, and based on the determination transitioning to the second state;
a hash chain processing engine executing on the computer processor configured to append a first block to a hash chain, wherein:
the first block comprises a documentation of the first state transition, and a fingerprint;
the documentation of the first state transition comprises at least one selected from a group consisting of a time stamp, an identifier of at least one of the at least two parties, an identifier of the first state, and identifier of the second state, and the event data;
the fingerprint is a unique identifier for a previous block on the hash chain immediately prior to the first block; and
appending the first block to the hash chain comprises:
generating a fingerprint from the previous block on the hash chain using a hash operation; and
adding the fingerprint, along with the documentation of the first state transition, to the first block; and
a hash chain repository storing the hash chain.

9. The system of claim 8, wherein the contract processing engine is further configured to make a determination that a second state transition criterion, connecting a third state to the first state, is not met by the event data, and based on the determination block a transition to the third state.

10. The system of claim 8, wherein the contract processing engine is further configured to:
make a determination that a second state transition criterion is met by the event data, and based on the determination perform a second state transition from the second state to a third state; and
append a second block to the hash chain, wherein the second block comprises a documentation of the second state transition.

11. The system of claim 8, wherein the first block further comprises a hash value of a block immediately prior to the first block, in the hash chain.

12. The system of claim 8, wherein a plurality of copies of the hash chain is maintained.

13. The system of claim 8, wherein obtaining the graph-based contract comprises graphically composing the graph-based contract.

14. A computer program comprising computer readable program code which when executed by a computer system causes the computer system to become configured to carry out the method of any of claims 1 to 7.

## Patentansprüche

1. Verfahren zum Überwachen der Ausführung graphenbasierter Verträge unter Verwendung von Hash-Ketten, umfassend:
Erhalten eines graphenbasierten Vertrags, wobei der graphenbasierte Vertrag dazu ausgelegt ist, einen Vertrag zum Durchführen einer Transaktion zwischen mindestens zwei Parteien durchzusetzen;
Erhalten von Ereignisdaten, die mit einer Ausführung des graphenbasierten Vertrags assoziiert sind;
Durchführen eines ersten Zustandsübergangs von einem ersten Zustand in einen zweiten Zustand, der durch den graphenbasierten Vertrag geregelt wird, durch:
Vornehmen einer Bestimmung, dass ein erstes Zustandsübergangskriterium von den Ereignisdaten erfüllt wird, wobei der erste Zustandsübergang den zweiten Zustand mit dem ersten Zustand verbindet, und basierend auf der Bestimmung, Übergehen in den zweiten Zustand; und Anhängen eines ersten Blocks an eine Hash-Kette, wobei:
der erste Block eine Dokumentation des ersten Zustandsübergangs und einen Fingerabdruck umfasst;
die Dokumentation des ersten Zustandsübergangs mindestens eines umfasst, das aus einer Gruppe ausgewählt wird, die aus einem Zeitstempel, einer Kennung mindestens einer der mindestens zwei Parteien, einer Kennung des ersten Zustands und einer Kennung des zweiten Zustands und den Ereignisdaten besteht;
der Fingerabdruck eine eindeutige Kennung für einen vorherigen Block in der Hash-Kette unmittelbar vor dem ersten Block ist; und
das Anhängen des ersten Blocks an die Hash-Kette umfasst:
Erzeugen eines Fingerabdrucks aus dem vorherigen Block in der Hash-Kette unter Verwendung einer Hash-Operation; und
Hinzufügen des Fingerabdrucks zusammen mit der Dokumentation des ersten Zustandsübergangs zum ersten Block.

2. Verfahren nach Anspruch 1, ferner umfassend:
Vornehmen einer Bestimmung, dass ein zweites Zustandsübergangskriterium, das einen dritten Zustand mit dem ersten Zustand verbindet, von den Ereignisdaten nicht erfüllt wird, und basierend auf der Bestimmung, Blockieren eines Übergangs in den dritten Zustand.

3. Verfahren nach Anspruch 1, ferner umfassend:
Vornehmen einer Bestimmung, dass ein zweites Zustandsübergangskriterium von den Ereignisdaten erfüllt wird, und basierend auf der Bestimmung, Durchführen eines zweiten Zustandsübergangs von dem zweiten Zustand in einen dritten Zustand; und
Anhängen eines zweiten Blocks an die Hash-Kette, wobei der zweite Block eine Dokumentation des zweiten Zustandsübergangs umfasst.

4. Verfahren nach Anspruch 1, wobei die Ereignisdaten mindestens eines umfassen, das aus einer Gruppe ausgewählt wird, die aus einer Eingabe durch mindestens eine der mindestens zwei Parteien, aus einer Datenbank erhaltenen Daten, aus der Hash-Kette erhaltenen Daten und aus einer zweiten Hash-Kette erhaltenen Daten besteht.

5. Verfahren nach Anspruch 1, wobei der erste Block ferner einen Hash-Wert eines Blocks unmittelbar vor dem ersten Block in der Hash-Kette umfasst.

6. Verfahren nach Anspruch 1, wobei mehrere Kopien der Hash-Kette unterhalten werden.

7. Verfahren nach Anspruch 1, wobei das Erhalten des graphenbasierten Vertrags das graphische Zusammenstellen des graphenbasierten Vertrags umfasst.

8. System zum Überwachen der Ausführung graphenbasierter Verträge unter Verwendung von Hash-Ketten, wobei das System umfasst:
einen Computerprozessor;
eine Vertragsverarbeitungs-Engine, die auf dem Computerprozessor ausgeführt wird und ausgelegt ist zum:
Erhalten eines graphenbasierten Vertrags, wobei der graphenbasierte Vertrag dazu ausgelegt ist, einen Vertrag zum Durchführen einer Transaktion zwischen mindestens zwei Parteien durchzusetzen;
Erhalten von Ereignisdaten, die mit einer Ausführung des graphenbasierten Vertrags assoziiert sind;
Durchführen eines ersten Zustandsübergangs von einem ersten Zustand in einen zweiten Zustand, der durch den graphenbasierten Vertrag geregelt wird, durch:
Vornehmen einer Bestimmung, dass ein erstes Zustandsübergangskriterium von den Ereignisdaten erfüllt wird, wobei der erste Zustandsübergang den zweiten Zustand mit dem ersten Zustand verbindet, und basierend auf der Bestimmung, Übergehen in den zweiten Zustand;
eine Hash-Ketten-Verarbeitungs-Engine, die auf dem Computerprozessor ausgeführt wird und dazu ausgelegt ist, einen ersten Block an eine Hash-Kette anzuhängen, wobei:
der erste Block eine Dokumentation des ersten Zustandsübergangs und einen Fingerabdruck umfasst;
die Dokumentation des ersten Zustandsübergangs mindestens eines umfasst, das aus einer Gruppe ausgewählt wird, die aus einem Zeitstempel, einer Kennung mindestens einer der mindestens zwei Parteien, einer Kennung des ersten Zustands und einer Kennung des zweiten Zustands und den Ereignisdaten besteht;
der Fingerabdruck eine eindeutige Kennung für einen vorherigen Block in der Hash-Kette unmittelbar vor dem ersten Block ist; und
das Anhängen des ersten Blocks an die Hash-Kette umfasst: Erzeugen eines Fingerabdrucks aus dem vorherigen Block in der Hash-Kette unter Verwendung einer Hash-Operation; und
Hinzufügen des Fingerabdrucks zusammen mit der Dokumentation des ersten Zustandsübergangs zum ersten Block; und
ein Hash-Ketten-Repositorium, in dem die Hash-Kette gespeichert ist.

9. System nach Anspruch 8, wobei die Vertragsverarbeitungs-Engine ferner dazu ausgelegt ist, eine Bestimmung vorzunehmen, dass ein zweites Zustandsübergangskriterium, das einen dritten Zustand mit dem ersten Zustand verbindet, von den Ereignisdaten nicht erfüllt wird, und basierend auf der Bestimmung, einen Übergang in den dritten Zustand zu blockieren.

10. System nach Anspruch 8, wobei die Vertragsverarbeitungs-Engine ferner ausgelegt ist zum:
Vornehmen einer Bestimmung, dass ein zweites Zustandsübergangskriterium von den Ereignisdaten erfüllt wird, und basierend auf der Bestimmung, Durchführen eines zweiten Zustandsübergangs von dem zweiten Zustand in einen dritten Zustand; und
Anhängen eines zweiten Blocks an die Hash-Kette, wobei der zweite Block eine Dokumentation des zweiten Zustandsübergangs umfasst.

11. System nach Anspruch 8, wobei der erste Block ferner einen Hash-Wert eines Blocks unmittelbar vor dem ersten Block in der Hash-Kette umfasst.

12. System nach Anspruch 8, wobei mehrere Kopien der Hash-Kette unterhalten werden.

13. System nach Anspruch 8, wobei das Erhalten des graphenbasierten Vertrags das graphische Zusammenstellen des graphenbasierten Vertrags umfasst.

14. Computerprogramm, das computerlesbaren Programmcode umfasst, der, wenn er durch ein Computersystem ausgeführt wird, bewirkt, dass das Computersystem dazu konfiguriert wird, das Verfahren nach einem der Ansprüche 1 bis 7 auszuführen.

## Revendications

1. Procédé de supervision de l'exécution de contrats à base de graphes au moyen de chaînes de hachage, comprenant :
l'obtention d'un contrat à base de graphes, le contrat à base de graphes étant configuré pour faire appliquer un contrat pour la réalisation d'une transaction entre au moins deux parties ;
l'obtention de données d'événement associées à une exécution du contrat à base de graphes ;
la réalisation, conformément au contrat à base de graphes, d'une première transition d'état depuis un premier état vers un deuxième état par :
la réalisation d'une détermination qu'un premier critère de transition d'état est rempli par les données d'événement, la première transition d'état reliant le deuxième état au premier état et, sur la base de la détermination, la transition vers le deuxième état ; et
l'adjonction d'un premier bloc à une chaîne de hachage, dans lequel :
le premier bloc comprend une documentation de la première transition d'état, et une empreinte ;
la documentation de la première transition d'état comprend au moins un élément sélectionné dans un groupe constitué par un horodatage, un identifiant d'au moins l'une des au moins deux parties, un identifiant du premier état, un identifiant du deuxième état, et les données d'événement ;
l'empreinte est un identifiant unique pour un bloc précédent sur la chaîne de hachage venant immédiatement avant le premier bloc ; et
l'adjonction du premier bloc à la chaîne de hachage comprend :
la génération d'une empreinte à partir du bloc précédent sur la chaîne de hachage au moyen d'une opération de hachage ; et
l'ajout de l'empreinte, ainsi que de la documentation de la première transition d'état, au premier bloc.

2. Procédé selon la revendication 1, comprenant en outre :
la réalisation d'une détermination qu'un deuxième critère de transition d'état, reliant un troisième état au premier état, n'est pas rempli par les données d'événement et, sur la base de la détermination, le blocage d'une transition vers le troisième état.

3. Procédé selon la revendication 1, comprenant en outre :
la réalisation d'une détermination qu'un deuxième critère de transition d'état est rempli par les données d'événement et, sur la base de la détermination, la réalisation d'une deuxième transition d'état depuis le deuxième état vers un troisième état ; et
l'adjonction d'un deuxième bloc à la chaîne de hachage, le deuxième bloc comprenant une documentation de la deuxième transition d'état.

4. Procédé selon la revendication 1, dans lequel les données d'événement comprennent au moins un élément sélectionné dans un groupe constitué par une entrée par au moins l'une des au moins deux parties, des données obtenues à partir d'une base de données, des données obtenues à partir de la chaîne de hachage, et des données obtenues à partir d'une deuxième chaîne de hachage.

5. Procédé selon la revendication 1, dans lequel le premier bloc comprend en outre une valeur de hachage d'un bloc venant immédiatement avant le premier bloc, dans la chaîne de hachage.

6. Procédé selon la revendication 1, dans lequel une pluralité de copies de la chaîne de hachage est conservée.

7. Procédé selon la revendication 1, dans lequel l'obtention du contrat à base de graphes comprend la composition graphique du contrat à base de graphes.

8. Système de supervision de l'exécution de contrats à base de graphes au moyen de chaînes de hachage, le système comprenant :
un processeur d'ordinateur ;
un moteur de traitement de contrats s'exécutant sur le processeur d'ordinateur et configuré pour :
obtenir un contrat à base de graphes, le contrat à base de graphes étant configuré pour faire appliquer un contrat pour la réalisation d'une transaction entre au moins deux parties ;
obtenir des données d'événement associées à une exécution du contrat à base de graphes ;
réaliser, conformément au contrat à base de graphes, une première transition d'état depuis un premier état vers un deuxième état par :
la réalisation d'une détermination qu'un premier critère de transition d'état est rempli par les données d'événement, la première transition d'état reliant le deuxième état au premier état et, sur la base de la détermination, la transition vers le deuxième état ;
un moteur de traitement de chaînes de hachage s'exécutant sur le processeur d'ordinateur, configuré pour adjoindre un premier bloc à une chaîne de hachage, dans lequel :
le premier bloc comprend une documentation de la première transition d'état, et une empreinte ;
la documentation de la première transition d'état comprend au moins un élément sélectionné dans un groupe constitué par un horodatage, un identifiant d'au moins l'une des au moins deux parties, un identifiant du premier état, un identifiant du deuxième état, et les données d'événement ;
l'empreinte est un identifiant unique pour un bloc précédent sur la chaîne de hachage venant immédiatement avant le premier bloc ; et
l'adjonction du premier bloc à la chaîne de hachage comprend :
la génération d'une empreinte à partir du bloc précédent sur la chaîne de hachage au moyen d'une opération de hachage ; et
l'ajout de l'empreinte, ainsi que de la documentation de la première transition d'état, au premier bloc ; et
un référentiel de chaînes de hachage stockant la chaîne de hachage.

9. Système selon la revendication 8, dans lequel le moteur de traitement de contrats est configuré en outre pour réaliser une détermination qu'un deuxième critère de transition d'état, reliant un troisième état au premier état, n'est pas rempli par les données d'événement et, sur la base de la détermination, bloquer une transition vers le troisième état.

10. Système selon la revendication 8, dans lequel le moteur de traitement de contrats est configuré en outre pour :
réaliser une détermination qu'un deuxième critère de transition d'état est rempli par les données d'événement et, sur la base de la détermination, réaliser une deuxième transition d'état depuis le deuxième état vers un troisième état ; et
adjoindre un deuxième bloc à la chaîne de hachage, le deuxième bloc comprenant une documentation de la deuxième transition d'état.

11. Système selon la revendication 8, dans lequel le premier bloc comprend en outre une valeur de hachage d'un bloc venant immédiatement avant le premier bloc, dans la chaîne de hachage.

12. Système selon la revendication 8, dans lequel une pluralité de copies de la chaîne de hachage est conservée.

13. Système selon la revendication 8, dans lequel l'obtention du contrat à base de graphes comprend la composition graphique du contrat à base de graphes.

14. Programme d'ordinateur comprenant un code de programme lisible par ordinateur qui, lorsqu'il est exécuté par un système informatique, amène le système informatique à se configurer pour mettre en œuvre le procédé selon l'une quelconque des revendications 1 à 7.
